# EUROPEAN PATENT SPECIFICATION

(11) **EP 2 755 301 B1**
(45) Date of publication and mention of the grant of the patent: **15.11.2017**
(21) Application number: 12830114.0
(22) Date of filing: 07.09.2012
(51) Int. Cl.: B60L 11/18, B60L 11/14, H02J 50/60, B60L 5/00, B60M 7/00, B60L 3/00, B60L 3/04, H02J 7/02, H02J 50/12, H02J 50/90

(54) **NON-CONTACT POWER SUPPLY METHOD USED TO RECHARGE A VEHICLE**
KONTAKTLOSE STROMVERSORGUNGSVERFAHREN ZUM AUFLADEN EINES FAHRZEUGS
MÉTHODE D'ALIMENTATION ÉLECTRIQUE SANS CONTACT DESTINÉE À RECHARGER UN VÉHICULE

(30) Priority: 09.09.2011 JP 2011197461
(43) Date of publication of application: 16.07.2014
(73) Proprietor: Technova Inc., Tokyo 100-0011 (JP)
(72) Inventor: ABE Shigeru, Saitama City, Saitama 338-8570 (JP); YASUDA Tomio, Tokyo 100-0011 (JP); SUZUKI Akira, Anjo City, Aichi 444-1192, (JP); HOSOI Nobuhiro, Anjo City, Aichi 444-1192, (JP)
(74) Representative: Winter, Brandl, Fürniss, Hübner, Röss, Kaiser, Polte - Partnerschaft mbB
(86) International application number: PCT/JP2012/072950
(87) International publication number: WO 2013/035853

(56) References cited:
- EP-A1- 2 278 680
- WO-A1-2005/109597
- JP-A- H06 311 659
- JP-A- 2004 328 808
- JP-A- 2008 236 917
- JP-A- 2010 183 705
- JP-A- 2011 125 153
- JP-A- 2011 507 481
- JP-B- 3 306 675
- US-A1- 2007 113 921
- US-A1- 2011 074 346
- US-A1- 2011 196 544

## Description

### TECHNICAL FIELD

The present invention relates to a contactless power transfer system for a movable object that performs contactless power transfer from a ground-based power transmission coil to a movable object such as an electrical vehicle including a power reception coil, thereby enables detection as well as removal of metallic foreign objects present on the power transmission coil.

### BACKGROUND ART

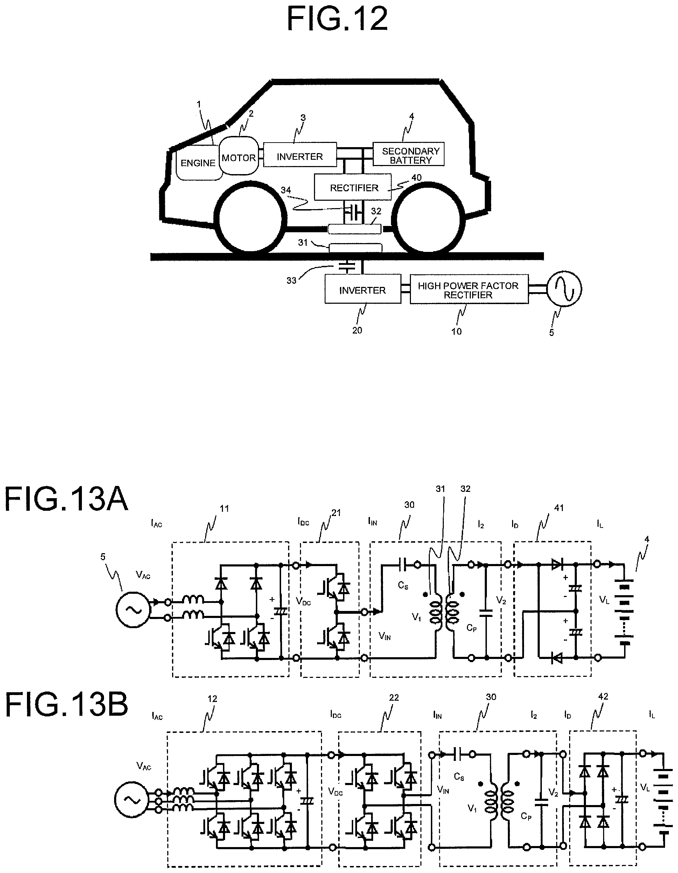

A contactless power transfer system makes use of electromagnetic induction between a power transmission coil (a primary coil) and a power reception coil (a secondary coil) constituting a contactless power transfer transformer to supply electrical power from the power transmission coil to the power reception coil. As illustrated in FIG. 12, a contactless power transfer system for a movable object, which makes use of the contactless power transfer system mentioned above for charging the secondary battery installed in an electrical vehicle or a plug-in hybrid vehicle, includes, on the ground side: a high power factor rectifier 10 that converts the alternate current of a commercial power supply 5 into direct current; an inverter 20 that generates a high-frequency alternating current from the direct current; a power transmission coil 31 that serves as one end of the contactless power transfer transformer; and a primary-side series capacitor 33 that is connected in series to the power transmission coil.

The WO 2005/109597 A1 discloses an inductive power transfer system comprising a primary unit operable to generate an electromagnetic field and at least one secondary device separable from the primary unit, and adapted to couple with the field when the secondary device is in proximity to the primary unit so that power can be received inductively by the secondary device from the primary unit without direct electrical conductive contacts there between. The system detects if there is a substantial difference between a power drawn from the primary unit and a power required by the secondary device or, if there is more than one secondary device, a combined power required by the secondary devices. Following such detection, the system restricts or stops the inductive power supply from the primary unit. The system detects the presence of unwanted parasitic loads in the vicinity of the primary unit.

The US 2011/196544 A1 discloses a system to control inductive power transfer in an inductive power transfer system and a method for designing an inductive power transfer system with power accounting. The method of controlling inductive power transfer includes measuring a characteristic of input power, a characteristic of power in the tank circuit, and receiving information from a secondary device. Estimating power consumption is based on the measured characteristic of tank circuit power and received information and comparing the measured characteristic of input power, the information from the secondary device, and the estimated power consumption to determine there is an unacceptable power loss. The method for designing an inductive power transfer system with power accounting includes changing the distance between a primary side and a secondary side and changing a load of the secondary side. For each distance between the primary side and the secondary side and for each load, a circuit parameter on the primary side in the tank circuit and a circuit parameter on the secondary side is measured during the contactless transfer of energy.

Furthermore, document EP 2278680 A1 discloses a contact less charging apparatus comprising an electric power transmission coil, a plate member and a spring. The plate member is freely displaceable between a first position at which the plate member is spaced from and above the electric power transmission coil and a second position at which approach of a to-be-charged object to the electric power transmission coil is permitted, and at least an upper surface of the plate member at the first position is slanted in relation to the horizontal plane. The spring urges the plate member from the second position toward the first position. The contactless charging apparatus, with the plate member at the second position, charges the to-be-charged object by means of electromagnetic induction.

In addition to that, document JP2011 125153A discloses a non-contacting power transmission system and a non-contacting power transmission device, in which water drops stuck on the surface of an antenna are removed to prevent deterioration in power transmission efficiency. Said power transmission system performs power transmission in a non-contacting state relative to a vehicle using electric energy as a power source. The system includes a power receiving side antenna mounted on a vehicle for receiving electric power and a power transmitting side antenna transmitting electric power to the power receiving side antenna. When an AC power vibrating at a resonance frequency is transmitted through electromagnetic coupling between antennas, a water drop removing means removes water drops stuck on a coupling surface where at least one electromagnetic coupling of the power transmission side antenna and the power receiving side antenna is formed.

Document JP 3306675 B discloses another charging apparatus with which heating a heating accident due to erroneous recognition of a foreign matter as an appliance is prevented by delivering a predetermined detection signal from the power supply body side to the machine body side and controlling the output from a primary oscillating section in response to a response signal returned back from the machine body side thereby detecting the loading state of an appliance body to be fed with power to the power supply body accurately. A detection signal is outputted constantly or intermittently from the power supply body side. When an appliance body is not coupled at a predetermined position on the body, no response signal is fed to an appliance detection means and a primary oscillating section stops the operation or restrain the output thereof. When the appliance body is loaded to the power supply body, the detection signal from the body side is returned as a response signal back to the body by an appliance response means in the body. The appliance detection means responds to the response signal to deliver a control signal to the primary oscillating section thus controlling the output therefrom such that the body side is fed with only required power.

The US 2011/074346 A1 discloses a wireless vehicle charger safety systems and methods using a detection subsystem, a notification subsystem and a management subsystem. The detection subsystem identifies a safety condition. The notification subsystem provides an indication of the safety condition. The management subsystem addresses the safety condition. Undesirable thermal conditions caused by foreign objects between a source resonator and a vehicle resonator are addressed by sensing high temperatures, providing a warning and powering down a vehicle charger, as appropriate for the environment in which the charger is deployed.

On the other hand, when there exists a plug-in hybrid vehicle on the vehicle side, an engine 1 and a motor 2 is installed as the drive source. Moreover, the plug-in hybrid vehicle includes: a secondary battery 4 that serves as the power source for the motor; an inverter 3 that converts the direct current from the secondary battery 4 into alternate current and supplies the alternate current to the motor 2; and a power transfer mechanism for the secondary battery 4. The power transfer mechanism includes a power reception coil 32 that serves as the other end of the contactless power transfer transformer; a rectifier 40 that converts the alternate current into direct current for the secondary battery 4; and a secondary-side parallel resonance capacitor 34 that is connected in parallel between the power reception coil 32 and the rectifier 40.

Herein, (the power transmission coil 31 + the power reception coil 32) are collectively referred to as the contactless power transfer transformer. Moreover, (the contactless power transfer transformer + the primary-side series capacitor 33 + the secondary-side parallel resonance capacitor 34) are collectively referred to as a contactless power transfer system. Furthermore, (a high-frequency power source + the contactless power transfer system + the secondary-side rectifier 40) are collectively referred to as a contactless power transfer system.

FIG. 13 is a circuit diagram of the contactless power transfer system.

FIG. 13A is a main circuit suitable for the commercial power supply 5 having 100 V to 220 V, single phase. Herein, a bridge-less high-power-factor boost rectifier 11 is used as the primary rectifier; a half-bridge inverter 21 is used as the inverter; and a double-voltage rectifier 41 is used as the secondary-side rectifier that rectifies the output of a contactless power transfer system 30.

FIG. 13B is a main circuit suitable for a power source having 200 V to 440 V, three phase. Herein, a three-phase high-power-factor PWM rectifier 12 is used as the primary-side rectifier; a full-bridge inverter 22 is used as the inverter; and a full-wave rectifier 42 is used as the secondary-side rectifier that rectifies the output of the contactless power transfer system 30.

The power transmission coil 31 has a flattened upper face that is either circular or rectangular in shape. At the time of transferring electrical power to a vehicle; the vehicle is parked in such a way that the power reception coil 32 is positioned nearly immediately above the power transmission coil 31, and electrical power is transferred in a contactless manner while maintaining an air gap in the range of 50 mm to 200 mm between the power transmission coil 31 and the power reception coil 32.

While transferring the electrical power, when a metallic foreign object such as a can, a nail, or a coin is present in the air gap formed between the power transmission coil 31 and the power reception coil 32, the metallic foreign object gets heated to a high temperature in the alternate current magnetic field of the air gap.

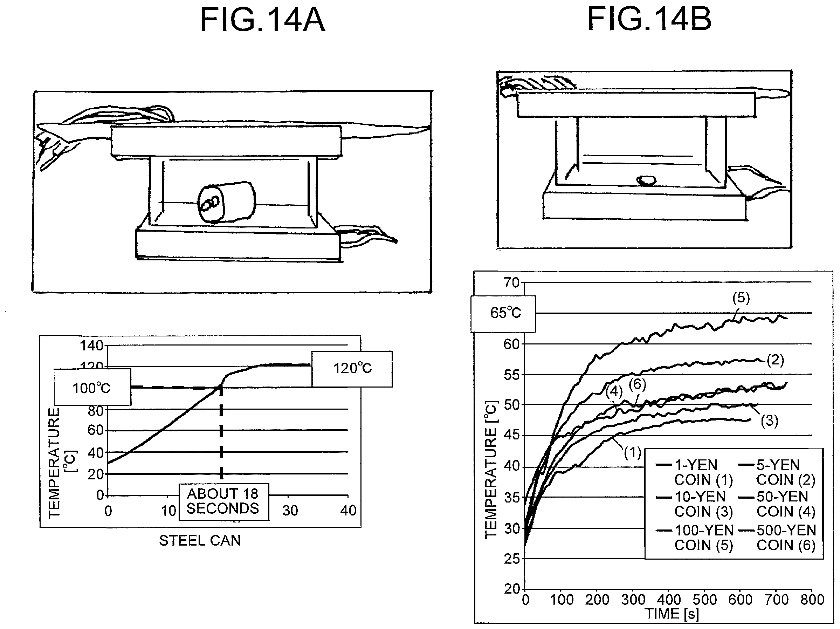

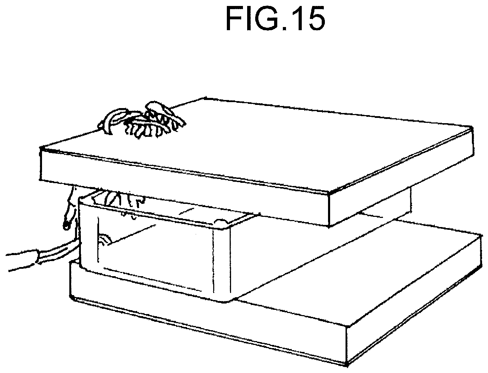

In FIG. 14 is illustrated a result of measuring the variation in temperature using an experiment apparatus illustrated in FIG. 15, which represents the power transmission coil and the power reception coil of a contactless power transfer system for movable objects, in the case when a steel can is present (FIG. 14A) and in the case when various coins are present (FIG. 14B) in between the power transmission coil and the power reception coil. In this experiment, electrical power of 1.5 kW is transferred at 50 kHz. The temperature of the steel can rose to 100 °C in about 18 seconds, and eventually rose to 120 °C. Regarding the coins, the tendency of temperature rise was different according to the coin type. For a 100-yen coin having the fastest temperature rise, the temperature rose to 65 °C in about 10 minutes.

Since a contactless power transfer system transmits energy on the same principle (of electromagnetic induction) as that of an induction heating cooker, a metal such as a steel can becomes hot in an extremely short period of time. Hence, in case a combustible material is present in the vicinity, then it poses a risk of ignition or smoke generation.

When a metallic foreign object produces heat, it implies an increase in the power transfer loss (=transmitted electrical power-received electrical power) during contactless power transfer.

Meanwhile, contactless power transfer is used also in charging cellular phones or electrical shavers. In that case too, if a metallic foreign object such as a coin or a pin is present in between the power transmission coil and the power reception coil, the metallic foreign object produces heat thereby threatening the safety of the product.

With the aim of preventing such an accident from occurring; in Patent Literature 1 mentioned below, a contactless battery charger is proposed in which the power receiving side having a secondary battery sends, to the power transmitting side, information about an electrical power value obtained by integrating the battery voltage and the charging current at the time of charging. Then, the power transmitting side compares that value with the electrical power value that has been transmitted. If the difference between the electrical power values is within a specified value, then the power transmitting side continues with the electrical power transmission. However, if the difference between electrical power values is exceeding the specified value, then the power transmitting side stops the transmission of electrical power.

### CITATION LIST

### Patent Literature

Patent Literature 1: Japanese Patent Application Laid-open No. 2011-83094

### SUMMARY OF INVENTION

### Problem to be Solved by the Invention

However, as compared to a contactless power transfer system for cellular phones, in a contactless power transfer system for a movable object, the electrical energy during power transfer is several orders of magnitude greater. For that reason, there is a relatively smaller rate of power transfer loss attributed to a metallic foreign object. Therefore, in a contactless power transfer system for a movable object; it is a difficult task to detect, with high degree of accuracy, the power transfer loss attributed to a metallic foreign object.

Moreover, in a contactless power transfer system for a movable object, even if the presence of a metallic foreign object on the power transmission coil is detected, it is not an easy task to remove the metallic foreign object because a vehicle is parked over the power transmission coil.

The present invention has been made in view of such a situation, and it is an object of the present invention to provide a contactless power transfer system for a movable object that is capable of detecting, with a high degree of accuracy, as well as removing a metallic foreign object present on the power transmission coil.

### Means for Solving Problem

The above-identified problem is solved by a foreign object detection method as claimed.

In the contactless power transfer system for a vehicle according to the present invention, the electrical power for foreign object detection purpose is supplied to the power transmission coil that is not positioned opposite the power reception coil, and, if P_{IN0} represents an input power of the power transmission coil, the foreign object detecting unit uses a value of P_{IN0} or uses a value expressed by an equation including P_{IN0} as the standard value and the measured value to detect presence or absence of a metallic foreign object.

In this case, before a vehicle is parked over the power transmission coil, it can be checked whether a metallic foreign object is present on the power transmission coil. Thus, in the case of detecting a foreign object using only the power transmission coil, the advantage is that the measurement error attributed to the misalignment between the power transmission coil and the power reception coil can be eliminated.

Moreover, in the contactless power transfer system for a movable object according to still another aspect of the present invention, if P_{IN0} represents an input power of the power transmission coil and P_{c1} represents copper loss of the power transmission coil, the foreign object detecting unit can use a value expressed by (P_{IN0}-P_{c1}) as the standard value and the measured value to detect presence or absence of a metallic foreign object.

In this way, the amount of loss equal to the copper loss is subtracted from the input power P_{IN0} of the power transmission coil. As a result, it becomes possible to enhance the detection sensitivity with respect to the power transfer loss attributed to a metallic foreign object.

Furthermore, in the contactless power transfer system for a movable object according to still another aspect of the present invention, if P_{IN0} represents an input power of the power transmission coil, P_{c1} represents copper loss of the power transmission coil, and if P_{f1} represents iron loss of the power transmission coil, the foreign object detecting unit may use a value expressed by (P_{IN0}-P_{c1}-P_{f1}) as the standard value and the measured value to detect presence or absence of a metallic foreign object.

In this way, the amount of loss equal to the copper loss and the iron loss is subtracted from the input power P_{IN0} of the power transmission coil. As a result, it becomes possible to further enhance the detection sensitivity with respect to the power transfer loss attributed to a metallic foreign object.

Moreover, in the contactless power transfer system for a movable object according to still another aspect of the present invention, the electrical power for foreign object detection purpose is preferred to be less than or equal to 20% of a rated power-transfer power.

In this way, by lowering the electrical power for foreign object detection purpose, it becomes possible to lower the risk of ignition or smoke generation during the detection of a foreign object.

Furthermore, the contactless power transfer system for a movable object according to still another aspect of the present invention further includes a foreign object removing unit that removes, when the foreign object detecting unit detects a metallic foreign object, the metallic foreign object on the power transmission coil.

Thus, in this apparatus, the foreign object detecting unit detects a metallic foreign object, and the foreign object removing unit removes that metallic foreign object.

Moreover, in the contactless power transfer system for a movable object according to still another aspect of the present invention, the foreign object removing unit includes: a non-magnetic and non-conductive cover member that covers an upper face of the power transmission coil; a pivoting unit that pivotally supports the cover member at an edge position of the power transmission coil so that the cover member is able to rotate by a predetermined angle around an axis line parallel to the upper face of the power transmission coil; and a rotary drive unit that rotates, when a metallic foreign object is detected, the cover member by a predetermined angle around the axis line.

Thus, the foreign object removing unit obliquely tilts the cover member of the power transmission coil, and removes the metallic foreign object.

Furthermore, in the contactless power transfer system for a movable object according to still another aspect of the present invention, the cover member can be made of a plurality of divided cover members that dividedly covers the upper face of the power transmission coil, the pivoting unit can be provided to each of the divided cover members, and, when a metallic foreign object is detected, the rotary drive unit can rotates all of the divided cover members.

In this case, since the cover members are formed by means of division, the highest positions of the divided cover members in the tilted state can be kept at a lower height as compared to the highest position in the undivided state.

Moreover, in the contactless power transfer system for a movable object according to still another aspect of the present invention, the foreign object removing unit can include an air compressor that, when a metallic foreign object is detected, blows high-speed air in the air gap formed between the power transmission coil and the power reception coil.

Thus, the foreign object removing unit blows high-speed air to remove a metallic foreign object from the power transmission coil.

Furthermore, in the contactless power transfer system for a movable object according to still another aspect of the present invention, the foreign object removing unit includes a resin belt conveyor and a pair of rollers. The pair of rollers includes a driving roller and a driven roller that support the belt conveyor in a circularly-travelling manner. The pair of rollers supports the belt conveyor so that one face of the circularly-travelling belt conveyor covers the upper face of the power transmission coil. When a metallic foreign object is detected, the driving roller causes the belt conveyor to travel in a circular manner so that the face of the belt conveyor covering the upper face of the power transmission coil is renewed.

Thus, in this foreign object removing unit, the belt conveyor covering the upper face of the power transmission coil moves so that a metallic foreign object present on the belt conveyor is removed.

Moreover, in the contactless power transfer system for a movable object according to still another aspect of the present invention, the foreign object removing unit includes a wiper member and a wiper driving unit. The wiper member wipes the upper face of the power transmission coil. The wiper driving unit drives the wiper member. When a metallic foreign object is detected, the wiper driving unit drives the wiper member so that the upper face of the transmission coil is wiped by the wiper member.

Thus, in this foreign object removing unit, the wiper members move on the power transmission coil so that a metallic foreign object present on the power transmission coil is removed.

Furthermore, in the contactless power transfer system for a movable object according to still another aspect of the present invention, based on the foreign object detection signal output by the foreign object detecting unit, supply of the electrical power for foreign object detection purpose to the power transmission coil may be stopped, and a foreign object detection warning may be displayed.

As a result, even in a contactless power transfer system for a movable object that does not include a foreign object removing unit; it becomes possible to avoid accidents caused due to the presence of a metallic foreign object.

Moreover, in the contactless power transfer system for a movable object according to still another aspect of the present invention, for each time when a preliminarily set time is elapsed, the electrical power for foreign object detection purpose may be supplied to the power transmission coil to which supply of the electrical power for foreign object detection purpose has been stopped, and the foreign object detection operation may be performed again. When the foreign object detecting unit does not detect a metallic foreign object, electrical power for power transfer purpose may be supplied to the power transmission coil

As a result, even in a contactless power transfer system for a movable object that does not include a foreign object removing unit; contactless power transfer can be started only after confirming the safety.

Furthermore, in the contactless power transfer system for a movable object according to still another aspect of the present invention, it is preferred that the foreign object removing unit that has removed a metallic foreign object from the upper face of the power transmission coil notifies the foreign object detecting unit about removal. Then, the foreign object detecting unit receives a notification and performs detection for a metallic foreign object on the power transmission coil, and, when no metallic foreign object is detected, electrical power for power transfer purpose is supplied to the power transmission coil.

Thus, regardless of the removal of a foreign object by the foreign object detecting unit, contactless power transfer can be started only after confirming the safety.

### Effect of the Invention

A contactless power transfer system for a movable object of the present invention is able to detect, with a high degree of accuracy, a metallic foreign object present on a power transmission coil and to remove that metallic foreign object.

Hence, even if a metallic foreign object is present on the power transmission coil, the foreign object can be removed in an expeditious manner and contactless power transfer to a movable object can be carried on safely and without any delay.

### BRIEF DESCRIPTION OF DRAWINGS

FIG. 1 is a schematic diagram illustrating a contactless power transfer system for a movable object according to a first embodiment of the present invention;
FIG. 2 is a block diagram illustrating a configuration of a foreign object detector of FIG. 1;
FIG. 3 is a flowchart illustrating an operation of the foreign object detecting unit of FIG. 2;
FIG. 4 is a view illustrating a modification example of the contactless power transfer system for a movable object of FIG. 1;
FIG. 5 is a schematic view illustrating a contactless power transfer system for a movable object according to a second embodiment of the present invention;
FIG. 6 is a flowchart illustrating an operation of the foreign object detector of FIG. 5;
FIG. 7 is a view illustrating a foreign object removing unit that has a tilted structure of a cover member;
FIG. 8 is a view illustrating a foreign object removing unit that has a tilted structure of divided cover members;
FIG. 9 is a view illustrating a foreign object removing unit that includes an air compressor;
FIG. 10 is a view illustrating a foreign object removing unit that includes a belt conveyor;
FIGS. 11A to 11C are views illustrating a foreign object removing unit that includes wiper members;
FIG. 12 is a view illustrating a conventional contactless power transfer system for a movable object;
FIGS. 13A and 13B are circuit diagrams of a contactless power transfer system for a movable object;
FIGS.14A and 14B are diagrams illustrating a measurement result of a heat generation experiment regarding a metallic foreign object; and
FIG. 15 is a view illustrating an apparatus used in the experiment of FIG. 14.

### MODE(S) FOR CARRYING OUT THE INVENTION

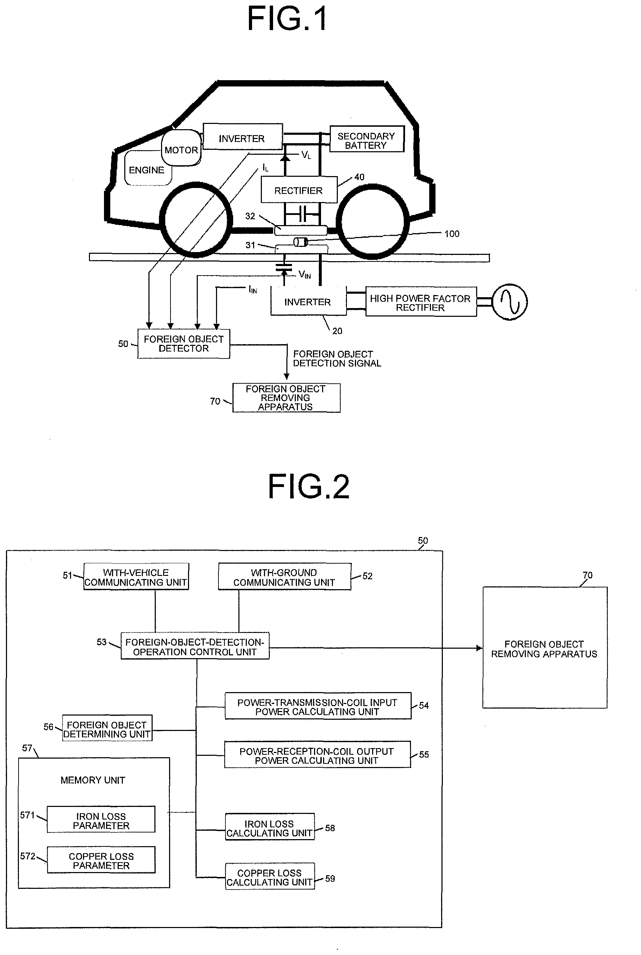

FIG. 1 schematically illustrates a contactless power transfer system for a movable object according to a non claimed embodiment of the present invention.

This apparatus includes: a foreign object detector 50 (in the scope of patent claims, a "foreign object detecting unit") that detects a metallic foreign object 100 present in between the power transmission coil 31 and the power reception coil 32 of a contactless power transfer system; and a foreign object removing apparatus 70 (in the scope of patent claims, a "foreign object removing unit") that, when a metallic foreign object is detected by the foreign object detector 50, removes the metallic foreign object 100 from the power transmission coil 31.

With the aim of detecting a metallic foreign object, the foreign object detector 50 obtains, from the ground side, information of an output voltage V_{IN} and an output current I_{IN} of the inverter 20 that are equivalent to the input voltage and the input current of the contactless power transfer system. Further, the foreign object detector 50 obtains, from the vehicle side, an output direct-current voltage V_{L} and an output direct-current electricity I_{L} of the rectifier 40 that are equivalent to the output voltage and the output current of the contactless power transfer system.

As illustrated in FIG. 2, the foreign object detector 50 includes: a with-vehicle communicating unit 51 that is an interface for exchanging information with the vehicle side by wireless communication; a with-ground communicating unit 52 that is an interface for exchanging information with the ground-side apparatus; a foreign-object-detection-operation control unit 53 that controls a foreign object detection operation; a power-transmission-coil input power calculating unit 54 that calculates the electrical power input to the power transmission coil 31; a power-reception-coil output power calculating unit 55 that calculates the electrical power output from the power reception coil 32; an iron loss calculating unit 58 that calculates the iron loss of the power transmission coil 31 and the power reception coil 32; a copper loss calculating unit 59 that calculates the copper loss of the power transmission coil 31 and the power reception coil 32; a foreign object determining unit 56 that determines whether a metallic foreign object is present on the power transmission coil 31; and a memory unit 57 that is used to store information required in various calculations.

The foreign-object-detection-operation control unit 53, the power-transmission-coil input power calculating unit 54, the power-reception-coil output power calculating unit 55, the iron loss calculating unit 58, the copper loss calculating unit 59, and the foreign object determining unit 56 are implemented when a computer executes operations written in a program.

The power-transmission-coil input power calculating unit 54 calculates, from the information of the output voltage V_{IN} and the output current I_{IN} that is sent from the inverter 20, an output power P_{IN}(=V_{IN}×I_{IN}) of the inverter 20. Then, the power-transmission-coil input power calculating unit 54 calculates the average of the electrical power P_{IN} for a certain period of time, and obtains an average input power P_{IN0} of the power transmission coil 31 for a certain period of time.

The power-reception-coil output power calculating unit 55 calculates, from the information of the output direct-current voltage V_{L} and the output direct current I_{L} of the rectifier 40 that is sent from the vehicle side, an output power P_{L}(=V_{L}×I_{L}) of the rectifier 40. Then, the power-reception-coil output power calculating unit 55 calculates the average of the electrical power P_{L} for a certain period of time, and obtains an average output power P_{L0} of the power reception coil for a certain period of time.

The copper loss calculating unit 59 calculates, from a wire-wound resistance (r₁) and the current (I_{IN}) of the power transmission coil 31, copper loss P_{c1}(=r₁×I_{IN}²) of the power transmission coil 31, and calculates, from a wire-wound resistance (r₂) and the current (I_{L}) of the power reception coil 32, copper loss P_{c2}(=r₂×I_{L}²) of the power reception coil 32. Herein, the information about the wire-wound resistance (r₁) of the power transmission coil 31 and the wire-wound resistance (r₂) of the power reception coil 32 is obtained in advance from the ground-side apparatus and the vehicle-side apparatus via the with-vehicle communicating unit 51 and the with-ground communicating unit 52, and is held in a copper loss parameter area 572 of the memory unit 57.

The iron loss calculating unit 58 calculates an estimated value of iron loss of the power transmission coil 31 and the power reception coil 32. The iron loss points to the electrical energy that is lost when the iron core (ferrite core) of the power transmission coil 31 and the power reception coil 32 undergoes magnetization by alternating current, and is expressed as the sum of the hysteresis loss and the eddy-current loss. The iron loss is a function of voltage. From the ground-side apparatus, an iron loss parameter is obtained in advance that enables calculation of the iron loss of the power transmission coil 31 by substituting V_{IN}. From the vehicle-side apparatus, an iron loss parameter is obtained in advance that enables calculation of the iron loss of the power reception coil 32 by substituting V_{L}. Then, the iron loss parameters are held in an iron loss parameter area 571 of the memory unit 57. As a result, the iron loss calculating unit 58 can calculate, from V_{IN}, an estimated value of iron loss (P_{f1}) of the power transmission coil 31; and can calculate, from V_{L}, en estimated value of iron loss (P_{f2}) of the power reception coil 32.

The foreign object determining unit 56 refers to the values calculated by the power-transmission-coil input power calculating unit 54, the power-reception-coil output power calculating unit 55, the copper loss determining unit 59, and the iron loss determining unit 58; and determines whether a metallic foreign object is present on the power transmission coil 31.

Prior to performing that determination, from the values P_{IN0}, P_{L0}, P_{c1}, P_{c2}, P_{f1}, and P_{f2} that are respectively calculated by the power-transmission-coil input power calculating unit 54, the power-reception-coil output power calculating unit 55, the copper loss calculating unit 59, and the iron loss calculating unit 58 in a state in which no metallic foreign object is present on the power transmission coil 31, the foreign object determining unit 56 calculates the copper loss as well as calculates a value Pₛ(=P_{IN0}-P_{L0}-P_{c1}-P_{c2}-P_{f1}-P_{f2}) of power transfer loss that excludes the iron loss. Then, the foreign object determining unit 56 records the value Pₛ as a standard value in the memory unit 57. Meanwhile, when the configuration of a contactless power transfer system on the vehicle side is classified into a number of types, then each vehicle installed with the contactless power transfer system of one type is parked over the power transmission coil 31 on which no metallic foreign object is present; and the standard value for each type is measured and is recorded in the memory unit 57.

If the target vehicle for contactless power transfer is parked over the power transmission coil 31 in a condition in which it is not clear whether a metallic foreign object is present on the power transmission coil 31, then the foreign object determining unit 56 calculates a measured value P'ₛ(=P'_{IN0}-P'_{L0}-P'_{c1}-P'_{c2}-P'_{c2}-P'_{f2}) from values P'_{IN0}, P'_{L0}, P'_{c1}, P'_{c2}, P'_{f1}, and P'_{f2} that are respectively calculated by the power-transmission-coil input power calculating unit 54, the power-reception-coil output power calculating unit 55, the copper loss calculating unit 59, and the iron loss calculating unit 58.

Then, the foreign object determining unit 56 reads, from the memory unit 57, the standard value Pₛ corresponding to the type of the contactless power transfer system installed in that vehicle, and calculates the difference (P'ₛ-Pₛ) between the measured value P'ₛ and the standard value Pₛ.

If the absolute value of difference (P'ₛ-Pₛ) is large, then it can be considered that a metallic foreign object is present in between the power transmission coil 31 and the power reception coil 32 and that the heat produced by the metallic foreign object is causing an increase in the power transfer loss.

Subsequently, the foreign object determining unit 56 compares the difference (P'ₛ-Pₛ) with a predetermined threshold value. If the difference (P'ₛ-Pₛ) exceeds the threshold value, then the foreign object determining unit 56 determines that a metallic foreign object is present on the power transmission coil 31. However, if the difference (P'ₛ-Pₛ) is equal to or below the threshold value, then the foreign object determining unit 56 determines that no metallic foreign object is present on the power transmission coil 31. Herein, the threshold value is set to a suitable value obtained by repeatedly performing a metallic-foreign-object detection test.

Meanwhile, comparison with the threshold value can also be performed for a value (=(P'ₛ-Pₛ)/Pₛ) obtained by dividing the difference (P'ₛ-Pₛ) by the standard value Pₛ.

If the foreign object determining unit 56 determines that a metallic foreign object is present on the power transmission coil 31, then the foreign-object-detection-operation control unit 53 sends a foreign object detection signal to the foreign object removing apparatus 70.

The operations performed by the foreign object removing apparatus 70 are described later.

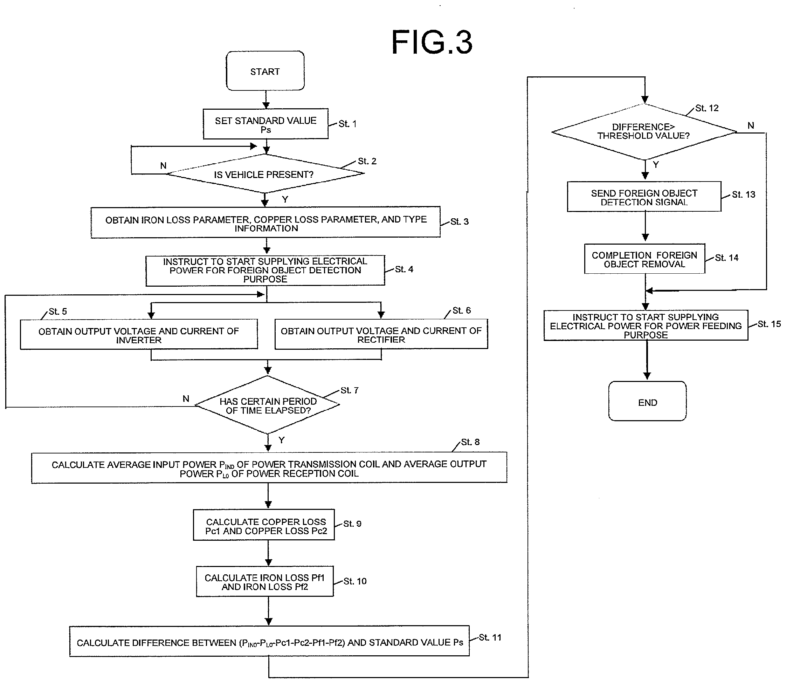

FIG. 3 illustrates an operation flow of the foreign object detector 50.

The standard value Pₛ of each vehicle installed with the contactless power transfer system of one type is measured and recorded in advance in the memory unit 57 (Step 1).

When a vehicle parked over the power transmission coil is detected (Step 2), the iron loss parameter, the copper loss parameter, and type information of the contactless power transfer system are obtained from that vehicle (Step 3), and the ground-side apparatus is instructed to start supplying electrical power for foreign object detection purpose (Step 4).

Herein, it is desirable that the electrical power for foreign object detection purpose is set to be equal to or smaller than 20% of a rated power-transfer power so that, even if a metallic foreign object is present on the power transmission coil 31, there is no ignition or smoke generation during the detection.

Subsequently, the output voltage and the output current of the inverter 20 are obtained, and the input power of the power transmission coil 31 is calculated (Step 5). Moreover, the output direct-current voltage and the direct-current of the rectifier 40 are obtained, and the output power of the power reception coil 32 is calculated (Step 6). These operations are continued for a certain period of time (Step 7), and the average input power P_{IN0} of the power transmission coil 31 and the average output power P_{L0} of the power reception coil 32 are calculated (Step 8).

Furthermore, the copper loss P_{c1} of the power transmission coil 31 and the copper loss P_{c2} of the power reception coil 32 are calculated (Step 9), as well as the iron loss P_{f1} of the power transmission coil 31 and the iron loss P_{f2} of the power reception coil 32 are calculated (Step 10).

Then, a measurement value (P_{IN0}-P_{L0}-P_{c1}-P_{c2}-P_{f1}-P_{f2}) is obtained, and the difference between that value and the standard value Pₛ is calculated (Step 11). If the absolute value of the difference exceeds a threshold value (Yes at Step 12), a foreign object detection signal is sent to the foreign object removing apparatus 70 (Step 13). When information about the completion of foreign object removal is received from the foreign object removing apparatus 70 (Step 14), the ground-side apparatus is instructed to start supplying electrical power for power transfer purpose (Step 15). Meanwhile, at Step 12, if the absolute value of the difference is equal to or smaller than the threshold value (No at Step 12), then the system control proceeds to Step 15 and the ground-side apparatus is instructed to start supplying electrical power for power transfer purpose.

Herein, instead of comparing the difference with the threshold value at Step 12, it is also possible to compare (the difference/Pₛ) with the threshold value.

In this way, in this contactless power transfer system for movable objects, while calculating the power transfer loss, the loss due to the copper loss and the iron loss is excluded. As a result, of the power transfer loss, "the power transfer loss attributed to a metallic foreign object" becomes relatively greater. For that reason, it becomes possible to enhance the detection sensitivity with respect to the power transfer loss attributed to a metallic foreign object, and to accurately determine the presence or absence of a metallic foreign object.

Meanwhile, herein, although the copper loss as well as the iron loss is excluded from the power transfer loss, it is alternatively possible to exclude only the copper loss which is easy to calculate.

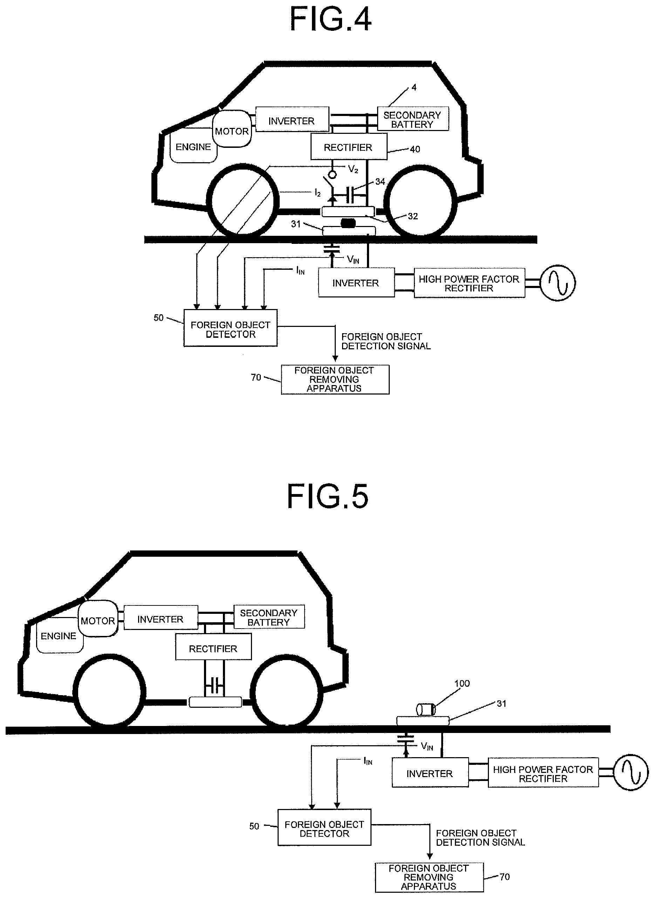

Moreover, when supplying electrical power for foreign object detection purpose is supplied to the power transmission coil 31 and the power reception coil 32 for detecting a metallic foreign object present on the power transmission coil 31, as illustrated in FIG. 4, the configuration can be such that the electrical connection between the power reception coil 32 and the rectifier 40 is disconnected (i.e., the output terminal of the power reception coil 32 is left open, or only the parallel capacitor 34 is connected to the power reception coil 32 without connecting the rectifier 40 or a load).

As a result, the power reception coil 32 is separated from the rectifier 40 and the secondary battery 4, and the amount of loss involving the rectifier 40 and the secondary battery 4 is excluded from the power transfer loss. For that reason, of the power transfer loss, "the power transfer loss attributed to a metallic foreign object" becomes relatively greater. That enables achieving an enhancement in the detection sensitivity with respect to the power transfer loss attributed to a metallic foreign object.

In this case, prior to instructing the ground-side apparatus to start supplying electrical power for foreign object detection purpose (Step 4 in FIG. 3), the foreign-object-detection-operation control unit 53 of the foreign object detector 50 instructs the vehicle side to open the output terminal of the power reception coil 32. Once the supply of electrical power for foreign object detection purpose is started, an output voltage V₂ and an output current I₂ of the power reception coil 32 are obtained from the vehicle side, and the power-reception-coil output power calculating unit 55 is instructed to calculate the output power of the power reception coil 32 (Step 6 illustrated in FIG. 3).

FIG. 5 schematically illustrates a contactless power transfer system for a movable object according to the claimed embodiment of the present invention. In this apparatus, before a vehicle is parked over the power transmission coil 31, the metallic foreign object 100 is detected by the foreign object detector 50 and is then removed by the foreign object removing apparatus 70.

Herein, although the configuration of the foreign object detector 50 is identical to the configuration according to the first embodiment (FIG. 2), the only difference is that the operations of the power-reception-coil output power calculating unit 55 are not carried out.

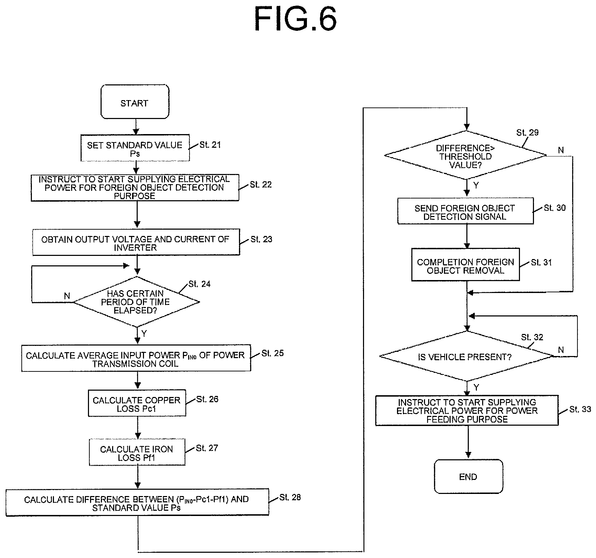

FIG. 6 is an operation flowchart of the foreign object detector 50.

In a state in which no metallic foreign object is present on the power transmission coil 31, the standard value Pₛ is measured and recorded in advance in the memory unit 57 (Step 21).

When a target vehicle for contactless power transfer moves closer, the ground-side apparatus is instructed to start supplying electrical power for foreign object detection purpose (Step 22).

The output voltage V_{IN} and the output current I_{IN} of the inverter 20 are obtained, and the output power P_{IN}(=V_{IN}×I_{IN}) of the inverter 20 is calculated (Step 23). This operation is performed for a certain period of time (Step 24) and the average input power P_{IN0} of the power transmission coil 31 is obtained (Step 25).

Moreover, from the wire-wound resistance (r₁) and I_{IN} of the power transmission coil 31 that are obtained in advance, the copper loss P_{c1}(=r₁×I_{IN}²) is calculated (Step 26). Furthermore, from the iron loss parameter and V_{IN} of the power transmission coil 31 that are obtained in advance, the estimated value of iron loss (P_{f1}) of the power transmission coil 31 is calculated (Step 27).

Then, a measurement value (P_{IN0}-P_{c1}-P_{f1}) is obtained, and the difference between that value and the standard value Pₛ is calculated (Step 28). If the absolute value of the difference exceeds a threshold value (Yes at Step 29), a foreign object detection signal is sent to the foreign object removing apparatus 70 (Step 30). When information about the completion of foreign object removal is received from the foreign object removing apparatus 70 (Step 31) and once it is confirmed that the vehicle is parked over the power transmission coil 31 (Step 32), the ground-side apparatus is instructed to start supplying electrical power for power transfer purpose (Step 33). Meanwhile, at Step 29, if the absolute value of the difference is equal to or smaller than the threshold value (No at Step 29), then the system control proceeds to Step 32 to confirm that the vehicle is parked over the power transmission coil 31 and the ground-side apparatus is instructed to start supplying electrical power for power transfer purpose.

Herein, at Step 29, instead of comparing the difference with the threshold value, it is also possible to compare (the difference/Pₛ) with the threshold value.

In this way, in this contactless power transfer system for a movable object, the loss equal to the copper loss and the iron loss is excluded from the input power P_{IN0} of the power transmission coil. As a result, "the power transfer loss attributed to a metallic foreign object" becomes relatively greater with respect to the input power P_{IN0}, and an enhancement is achieved in the detection sensitivity with respect to a metallic foreign object.

Moreover, in this contactless power transfer system for a movable object, a metallic foreign object is detected and removed before a vehicle is driven over the power transmission coil 31. For that reason, even if there is ignition or smoke generation during the detection of a foreign object, there is almost no effect on the vehicle.

Furthermore, as compared to the first embodiment, a shorter sequence of operations enables the detection of a foreign object. Hence, it is easier to implement the second embodiment.

Moreover, in this contactless power transfer system for a movable object, a foreign object is detected using only the power transmission coil. Hence, as compared to the apparatus according to the first embodiment, the advantage is that the measurement error attributed to the misalignment between the power transmission coil and the power reception coil can be eliminated.

Meanwhile, herein, although the copper loss as well as the iron loss is excluded from the input power P_{IN0} of the power transmission coil, it is alternatively possible to exclude only the copper loss which is easy to calculate.

Still alternatively, instead of excluding the copper loss and the iron loss, a metallic foreign object can be detected from the difference between the average input power P_{IN0} of the power transmission coil 31 and the standard value of the power transmission coil 31.

In a another embodiment, the explanation is given about a configuration of the foreign object removing apparatus 70.

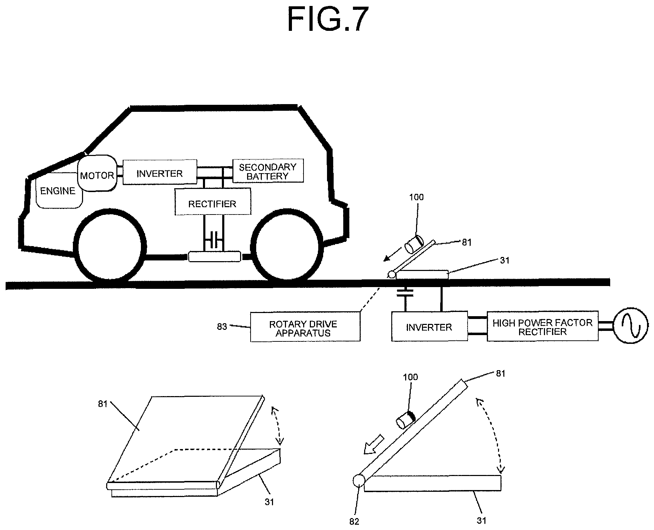

The foreign object removing apparatus illustrated in FIG. 7 includes: a single cover member 81 that covers the upper face of the power transmission coil 31; a pivoting mechanism 82 that pivotally supports the cover member 81 at an edge position of the power transmission coil 31; and a rotary drive apparatus 83 that, when a foreign object detection signal is input from the foreign object detector 50, rotates the pivotally-supported cover member 81 by a predetermined angle.

The pivoting mechanism 82 pivotally supports the cover member 81 in such a way that the cover member 81 is able to rotate around the axis line parallel to the upper face of the power transmission coil 31.

The cover member 81 is made of a material such as reinforced resin that is non-magnetic and non-conductive in nature and that has excellent mechanical strength. In its normal state, the cover member 81 covers the upper face of the power transmission coil 31 along the upper face of power transmission coil 31.

When the foreign object detector 50 inputs a foreign object detection signal after detecting the metallic foreign object 100 on the cover member 81, the rotary drive apparatus 83 rotates the cover member 81 around the axis line parallel to the upper face of the power transmission coil 31. Herein, the maximum rotation angle of the cover member 81 is set to be about 30°.

When the cover member 81 becomes tilted as a result of the rotation, the metallic foreign object 100 slides down the cover member 81 due to the action of gravity.

Then, the rotary drive apparatus 83 sets the cover member 81, on which the metallic foreign object 100 is not present any more, to the normal state of covering the power transmission coil 31; and then notifies the foreign object detector 50 about the completion of foreign object removal.

In this foreign object removing apparatus, the highest position of the tilted cover member 81 becomes relatively higher. Therefore, if a vehicle is parked over the power transmission coil 31, then there is a risk that the leading end of the tilted cover member 81 abuts against the underside of the vehicle. For that reason, this foreign object removing apparatus can be suitably used in the contactless power transfer system for movable objects (FIG. 5) according to the second embodiment in which the detection of a foreign object is performed before a vehicle makes its way to the contactless power transfer position.

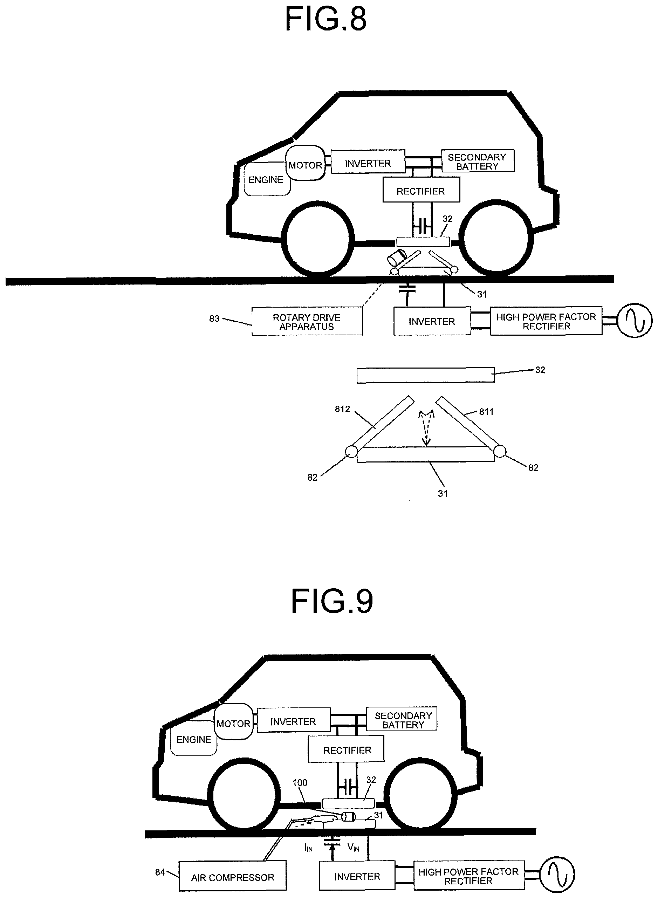

In FIG. 8 is illustrated a foreign object removing apparatus in which the cover member is configured with two divided cover members 811 and 812 and in which the pivoting mechanism 82 is individually disposed for each of the divided cover members 811 and 812.

When the foreign object detector 50 inputs a foreign object detection signal, the rotary drive apparatus 83 rotates each of the two divided cover members 811 and 812 around the axis line parallel to the upper face of the power transmission coil 31.

In this apparatus, since the cover members 811 and 812 are formed by division, the highest positions of the divided cover members 811 and 812 in the tilted state are not high. For that reason, this foreign object removing apparatus can also be suitably used in the contactless power transfer system for movable objects (FIG. 1) according to the first embodiment in which the detection of a foreign object is performed after a vehicle makes its way to the contactless power transfer position.

Meanwhile, herein, although two divided covers are used, it is also possible to have three or more number of divisions of the cover member.

In FIG. 9 is illustrated a foreign object removing apparatus that includes an air compressor 84. When the foreign object detector 50 inputs a foreign object detection signal, the air compressor 84 blows high-speed air in the air gap formed between the power transmission coil 31 and the power reception coil 32, and blows away the metallic foreign object 100 present on the power transmission coil 31.

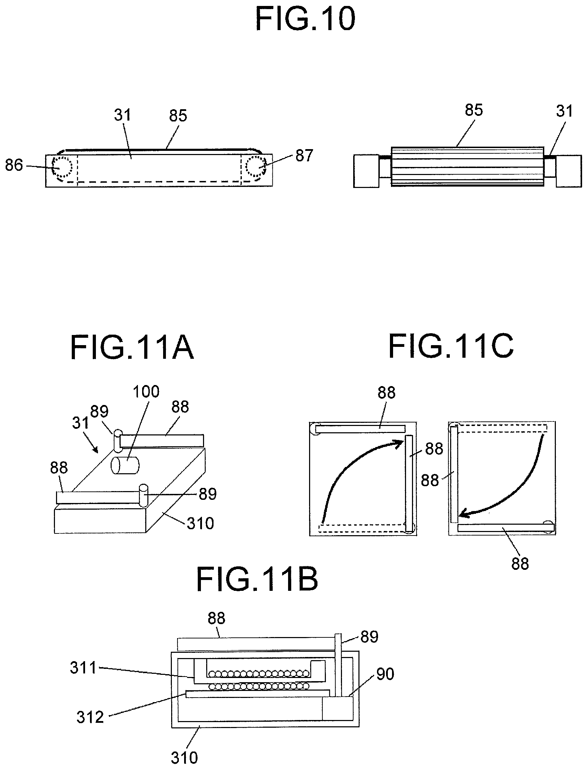

In FIG. 10 is illustrated a foreign object removing apparatus in which a belt conveyor 85 made of resin is used. This belt conveyor 85 is supported by a pair of rollers, namely, a driving roller 86 and a driven roller 87 in such a way that the belt conveyor 85 travels in a circular manner with one surface thereof covering the upper face of the power transmission coil 31. When the foreign object detector 50 inputs a foreign object detection signal after detecting a metallic foreign object on the belt conveyor 85, the driving roller 86 rotates the belt conveyor 85 and makes it travel in a circular manner until the surface of the belt conveyor 85 covering the upper face of the power transmission coil 31 is completely renewed. As a result of such circular travelling, the metallic foreign object present on the belt conveyor 85 is removed.

In FIGS. 11A to 11C illustrate a foreign object removing apparatus that includes two wiper members 88 that wipe the upper surface of the power transmission coil 31. One end of each wiper member 88 is fixed to a drive shaft 89 that is placed at the diagonal position of a case 310 in which the power transmission coil 31 is housed. As illustrated in a cross-sectional view in FIG. 11B, a motor 90 that rotates the drive shaft 89 is placed in the space available below a shield 312 that is present inside the case 310 (and that prevents the leakage magnetic flux of the power transmission coil 31, which is configured by winding an electrical wire around a ferrite core 311, from running on the lower side).

When the foreign object detector 50 inputs a foreign object detection signal after detecting the metallic foreign object 100 (FIG. 11A) present on the case 310 of the power transmission coil 31, the motor 90 rotates each of the two wiper members 88 by 90° as illustrated in FIG. 11C. As a result of the rotation of the two wiper members 88, the surface of the case 310 of the power transmission coil 31 is wiped over the length and breadth thereof, and the metallic foreign object 100 present on the power transmission coil 31 is removed.

In this way, when a foreign object detection signal is received from the foreign object detector 50, the foreign object removing apparatus 70 removes the metallic foreign object 100 by implementing various methods and notifies the foreign object detector 50 about the completion of foreign object removal.

Meanwhile, herein, the explanation is for a case in which the foreign object removing apparatus 70 performs operations after directly receiving input of a foreign object detection signal from the foreign object detector 50. However, alternatively, the configuration can be such that, based on a foreign object detection signal from the foreign object detector 50, alerting information is displayed on a display or the like. Then, either an administrator of the ground-side apparatus or the driver of a vehicle who comes across that information operates the foreign object removing apparatus 70.

Still alternatively, the configuration can be such that, based on a foreign object detection signal from the foreign object detector 50 that detected a foreign object, the supply of electrical power to the power transmission coil in the ground-side apparatus is stopped and a foreign object detection warning (a lamp or a warning sound) is displayed on a continuing basis.

In the case in which the foreign object detector 50 detects a foreign object thereby leading to the stopping of electrical power supply to the power transmission coil, the configuration can be such that, for each time when a preliminarily set time is elapsed, the electrical power for foreign object detection purpose is supplied to the power transmission coil, and the foreign object detection operation is performed again. Then, when no foreign object is detected, the electrical power supply to the power transmission coil is switched to the electrical power supply for power transfer purpose. With that, contactless power transfer to movable objects can be performed only after it is confirmed that the foreign object is not present any more.

Moreover, in the case in which the foreign object removing apparatus 70 removes a foreign object and notifies the foreign object detector 50 about the completion of foreign object removal, the configuration can be such that the foreign object detector 50 performs the foreign object detection operation and, only after it is confirmed that the foreign object is not detected any more, supplies the power transmission coil with electrical power supply for power transfer purpose.

In this way, a contactless power transfer system for movable objects according to the present invention is able to detect, with a high degree of accuracy, a metallic foreign object present on a power transmission coil and to remove that metallic foreign object. As a result, while transfer electrical power to a movable object in a contactless manner, it becomes possible to avoid accidents caused by metallic foreign objects or to avoid stagnation of the power transfer operation. Hence, contactless power transfer can be performed in a safe and stable manner.

### INDUSTRIAL APPLICABILITY

A contactless power transfer system for movable objects according to the preset invention enables avoiding accidents caused by metallic foreign objects as well as enables safe and stable contactless power transfer; and can be extensively used for contactless power transfer of a number of movable objects such as electrical vehicles, plug-in hybrid vehicles, carriers, mobile robots, and the like.

### REFERENCE SIGNS LIST

1 ENGINE
2 MOTOR
3 INVERTER
4 SECONDARY BATTERY
5 COMMERCIAL POWER SUPPLY
10 HIGH POWER FACTOR RECTIFIER
20 INVERTER
31 POWER TRANSMISSION COIL
32 POWER RECEPTION COIN
33 PRIMARY-SIDE SERIES CAPACITOR
34 SECONDARY-SIDE PARALLEL RESONANCE CAPACITOR
40 RECTIFIER
50 FOREIGN OBJECT DETECTOR
51 WITH-VEHICLE COMMUNICATING UNIT
52 WITH-GROUND COMMUNICATING UNIT
53 FOREIGN-OBJECT-DETECTION-OPERATION CONTROL UNIT
54 POWER-TRANSMISSION-COIL INPUT POWER CALCULATING UNIT
55 POWER-RECEPTION-COIL OUTPUT POWER CALCULATING UNIT
56 FOREIGN OBJECT DETERMINING UNIT
57 MEMORY UNIT
58 IRON LOSS CALCULATING UNIT
59 COPPER LOSS CALCULATING UNIT
70 FOREIGN OBJECT REMOVING APPARATUS
81 COVER MEMBER
82 PIVOTING MECHANISM
83 ROTARY DRIVE APPARATUS
84 AIR COMPRESSOR
85 BELT CONVEYOR
86 DRIVING ROLLER
87 DRIVEN ROLLER
88 WIPER MEMBER
89 DRIVE SHAFT
90 MOTOR
100 METALLIC FOREIGN OBJECT
310 CASE
311 FERRITE CORE
312 SHIELD
571 IRON LOSS PARAMETER MEMORY AREA
572 COPPER LOSS PARAMETER MEMORY AREA
811 DIVIDED COVER MEMBER
812 DIVIDED COVER MEMBER

## Claims

1. A method for a contactless power transfer for a vehicle comprising:
a. Obtaining a standard value of power transfer loss **Pₛ** in advance by supplying electrical power for foreign object detection purpose to a power transmission coil (31) installed on a ground side in a state in which a metallic foreign object (100) is not present on the power transmission coil (31) and store the standard value **Pₛ** in a memory unit (57) (step 21)
b. Supplying electrical power for foreign object detection purpose to the power transmission coil (31) when a target vehicle for contactless power transfer moves closer and is in a state in which the power transmission coil is not positioned opposite a power reception coil (32) installed on the target vehicle, (step 22)
c. Obtaining a measured value of power loss in the foreign detecting unit;
d. calculating a difference between the measured value from c. and the standard value **Pₛ** (Step 28),
e. sending a foreign object detection signal to a foreign object removing apparatus (70) if an absolute value of the difference between the measured value and the standard value exceeds a threshold value (Step 29, 30),
f. Receiving information about a completion of foreign object removal from the foreign object removing apparatus (70) (step 31)
g. Transferring power from the power transmission coil (31) to the power reception coil (32) by electromagnetic induction in a state in which the power reception coil is positioned opposite the power transmission coil across a gap. (step 32, 33).

2. The method for a contactless power transfer for a vehicle according to claim 1, wherein obtaining the standard value in **a.** and the measured value in **c.** comprise the method steps:
**a1./c1.** calculating a copper loss **P_{c1}** (**=r₁ x I_{IN}²**) from a wire-wound resistance (**r₁**) and **I_{IN}** of the power transmission coil (31) that are obtained in advance and, if **P_{IN0}** represents an input power of the power transmission coil (31),
**a2./c2.** using a value expressed by (**P_{IN0}-P_{c1}**) as the measured / the standard value in the foreign object detecting unit.

3. The method for a contactless power transfer for a vehicle according to claim 1, wherein obtaining the standard value in **a.** and the measured value in **c.** comprise the method steps:
**a1./c1.** calculating an estimated value of iron loss (**P_{f1}**) of the power transmission coil (31) from the iron loss parameter and **V_{IN}** of the power transmission coil (31) that are obtained in advance
**a2./c2.** calculating a copper loss **P_{c1} (=r₁** x **I_{IN}²**) from a wire-wound resistance (**r₁**) and **I_{IN}** of the power transmission coil (31) that are obtained in advance
**a3./c3.** using a value expressed by (**P_{IN0}-P_{c1}-P_{f1}**) as the standard value / the measured value in the foreign object detecting unit if **P_{IN0}** represents an input power of the power transmission coil.

4. The method for a contactless power transfer for a vehicle according to claim 1, wherein the electrical power for foreign object detection purpose is less than or equal to 20% of a rated power-transfer power.

5. The method for a contactless power transfer for a vehicle according to claim 1, wherein, based on the foreign object detection signal output by the foreign object detecting unit, the following steps are carried out:
stopping supply of the electrical power for foreign object detection purpose to the power transmission coil, and
displaying a foreign object detection warning.

6. The method for a contactless power transfer for a vehicle according to claim 5, comprising:
for each time when a preliminarily set time is elapsed,
supplying the electrical power for foreign object detection purpose to the power transmission coil to which supply of the electrical power for foreign object detection purpose has been stopped, and performing detection by the foreign object detection operation again, and,
when the foreign object detecting unit does not detect a metallic foreign object, supplying electrical power for power transfer purpose to the power transmission coil.

7. The method for a contactless power transfer for a vehicle according to claim 1, comprising:
notifying the foreign object detecting unit about removal by the foreign object removing unit (70) that has removed a metallic foreign object from the upper face of the power transmission coil,
receiving a notification and performing detection for a metallic foreign object on the power transmission coil by the foreign object detecting unit, and
when no metallic foreign object is detected, supplying by electrical power for power transfer purpose to the power transmission coil.

8. The method for a contactless power transfer for a vehicle according to claim 1, wherein the foreign object removing unit (70) includes:
a non-magnetic and non-conductive cover member (81) that covers an upper face of the power transmission coil;
a pivoting unit (82) that pivotally supports the cover member at an edge position of the power transmission coil so that the cover member is able to rotate by a predetermined angle around an axis line parallel to the upper face of the power transmission coil; and
a rotary drive unit (83) that rotates, when a metallic foreign object is detected, the cover member by a predetermined angle around the axis line.

9. The method for a contactless power transfer for a vehicle according to claim 8, wherein
the cover member is made of a plurality of divided sever members (811, 812) that dividedly covers the upper face of the power transmission coil,
the pivoting unit (82) is provided to each of the divided cover members, and,
when a metallic foreign object is detected, the rotary drive unit rotates all of the divided cover members.

10. The method for a contactless power transfer for a vehicle according to claim 1, wherein
the foreign object removing unit (70) includes an air compressor (84) that blows, when a metallic foreign object is detected, high-speed air to an air gap formed between the power transmission coil and the power reception coil.

11. The method for a contactless power transfer for a vehicle according to claim 1, wherein
the foreign object removing unit (70) includes a resin belt conveyor and a pair of rollers (86, 87),
the pair of rollers includes a driving roller and a driven roller that support the belt conveyor in a circularly-travelling manner,
the pair of rollers supports the belt conveyor so that one face of the circularly-travelling belt conveyor covers the upper face of the power transmission coil, and,
when a metallic foreign object is detected, the driving roller causes the belt conveyor to travel in a circular manner so that the face of the belt conveyor covering the upper face of the power transmission coil is renewed.

12. The method for a contactless power transfer for a vehicle according to claim 1, wherein
the foreign object removing unit (70) includes a wiper member (88) and a wiper driving unit,
the wiper member wipes the upper face of the power transmission coil,
the wiper driving unit drives the wiper member, and,
when a metallic foreign object is detected, the wiper driving unit drives the wiper member so that the upper face of the transmission coil is wiped by the wiper member.

## Patentansprüche

1. Verfahren für eine kontaktlose Energieübertragung für ein Fahrzeug mit:
a. Erhalten eines Standardwerts eines Energieübertragungsverlusts Pₛ im Voraus durch Bereitstellen von elektrischer Energie zum Zwecke einer Fremdkörpererfassung an eine auf einer Bodenseite angebrachte Energieübertragungsspule (31) in einem Zustand, in welchem kein metallischer Fremdkörper (100) auf der Energieübertragungsspule (31) vorhanden ist, und Speichern des Standardwerts Pₛ in einer Speichereinheit (57) (Schritt 21);
b. Bereitstellen von elektrischer Energie zum Zwecke einer Fremdkörpererfassung an die Energieübertragungsspule (31), wenn sich ein Zielfahrzeug für eine kontaktlose Energieübertragung näher heranbewegt und sich in einem Zustand befindet, in welchem die Energieübertragungsspule nicht gegenüber einer an dem Zielfahrzeug angebrachten Energieaufnahmespule (32) positioniert ist (Schritt 22);
c. Erhalten eines Messwerts eines Energieverlusts in der Fremdkörpererfassungseinheit;
d. Berechnen einer Differenz zwischen dem Messwert aus c. und dem Standardwert Pₛ (Schritt 28);
e. Senden eines Fremdkörpererfassungssignals an eine Fremdkörperentfernungsvorrichtung (70), falls ein absoluter Wert der Differenz zwischen dem Messwert und dem Standardwert einen Schwellwert überschreitet (Schritt 29, 30);
f. Erhalten einer Information über einen Abschluss einer Fremdkörperentfernung von der Fremdkörperentfernungsvorrichtung (70) (Schritt 31);
g. Übertragen von Energie von der Energieübertragungsspule (31) an die Energieaufnahmespule (32) mittels elektromagnetischer Induktion in einem Zustand, in welchem die Energieaufnahmespule gegenüber der Energieübertragungsspule über eine Lücke hinweg positioniert ist (Schritt 32, 33).

2. Verfahren für eine kontaktlose Energieübertragung für ein Fahrzeug nach Anspruch 1, wobei das Erhalten des Standardwerts in a. und des Messwerts in c. die Verfahrensschritte umfasst:
a1. / c1. Berechnen eines Kupferverlusts P_{c1} (=r₁ x I_{IN}²) aus einem Drahtwiderstand (r₁) und I_{IN} der Energieübertragungsspule (31), welche im Voraus erhalten werden, und, falls P_{IN0} eine Eingangsenergie der Energieübertragungsspule (31) darstellt,
a2. / c2. Verwenden eines Werts, welcher sich durch (P_{IN0} - P_{c1}) ausdrückt als den Mess-/ den Standardwert in der Fremdkörpererfassungseinheit.

3. Verfahren für eine kontaktlose Energieübertragung für ein Fahrzeug nach Anspruch 1, wobei das Erhalten des Standardwerts in a. und des Messwerts in c. die Verfahrensschritte umfasst:
a1. / c1. Berechnen eines Schätzwerts eines Eisenverlusts (P_{f1}) der Energieübertragungsspule (31) aus dem Eisenverlustparameter und V_{IN} der Energieübertragungsspule (31), welche im Voraus erhalten werden,
a2. / c2. Berechnen eines Kupferverlusts P_{c1} (=r₁ x I_{IN}²) aus einem Drahtwiderstand (r₁) und I_{IN} der Energieübertragungsspule (31), welche im Voraus erhalten werden,
a3./ c3. Verwenden eines Werts, welcher sich durch (P_{IN0} - P_{c1} - P_{f1}) ausdrückt, als den Standartwert/ den Messwert in der Fremdkörpererfassungseinheit, falls P_{IN0} eine Eingangsenergie der Energieübertragungsspule darstellt.

4. Verfahren für eine kontaktlose Energieübertragung für ein Fahrzeug nach Anspruch 1, wobei die elektrische Energie zum Zwecke einer Fremdkörpererfassung kleiner oder gleich als 20% einer Nennübertragungsenergie ist.

5. Verfahren für eine kontaktlose Energieübertragung für ein Fahrzeug nach Anspruch 1, wobei basierend auf der Fremdkörpererfassungssignalausgabe durch die Fremdkörpererfassungseinheit die folgenden Schritte durchgeführt werden:
Stoppen einer Bereitstellung von elektrischer Energie zum Zwecke einer Fremdkörpererfassung an die Energieübertragungsspule, und
Anzeigen einer Fremdkörpererfassungswarnung.

6. Verfahren für eine kontaktlose Energieübertragung für ein Fahrzeug nach Anspruch 5, mit:
für jedes Mal, wenn eine vorläufig eingestellte Zeit abgelaufen ist,
Bereitstellen der elektrischen Energie zum Zwecke einer Fremdkörpererfassung an die Energieübertragungsspule, an welche ein Bereitstellen der elektrischen Energie zum Zwecke einer Fremdkörpererfassung gestoppt wurde, und erneutes Durchführen einer Erfassung mittels des Fremdkörpererfassungsbetriebs, und,
wenn die Fremdkörpererfassungseinheit keinen metallischen Fremdkörper erfasst, Bereitstellen von elektrischer Energie zum Zwecke einer Energieübertragung an die Energieübertragungsspule.

7. Verfahren für eine kontaktlose Energieübertragung für ein Fahrzeug nach Anspruch 1, mit:
Benachrichtigen der Fremdkörpererfassungseinheit über ein Entfernen durch die Fremdkörperentfernungseinheit (70), welche einen metallischen Fremdkörper von der Oberseite der Energieübertragungsspule entfernt hat,
Erhalten einer Benachrichtigung und Durchführen einer Erfassung für einen metallischen Fremdkörper auf der Energieübertragungsspule mittels der Fremdkörpererfassungseinheit, und
wenn kein metallischer Fremdkörper erfasst wird, Bereitstellen von elektrischer Energie zum Zwecke einer Energieübertragung an die Energieübertragungsspule.

8. Verfahren für eine kontaktlose Energieübertragung für ein Fahrzeug nach Anspruch 1, wobei die Fremdkörperentfernungseinheit (70) umfasst:
ein nicht magnetisches und nicht leitendes Abdeckungselement (81), welches eine Oberseite der Energieübertragungsspule abdeckt;
eine Schwenkeinheit (82), welche das Abdeckungselement schwenkbar an einer Randposition der Energieübertragungsspule derart lagert, dass das Abdeckungselement um einen vorbestimmten Winkel um eine Achslinie, welche parallel zu der Oberseite der Energieübertragungsspule ist, rotieren kann; und
einer Drehantriebseinheit (83), welche, wenn ein metallischer Fremdkörper erfasst wird, das Abdeckungselement um einen vorbestimmten Winkel um die Achslinie rotiert.

9. Verfahren für eine kontaktlose Energieübertragung für ein Fahrzeug nach Anspruch 8, wobei
das Abdeckungselement aus einer Vielzahl von getrennten Abdeckungselementen (811, 812) besteht, welche die Oberseite der Energieübertragungsspule getrennt abdecken,
die Schwenkeinheit (82) an jedem der getrennten Abdeckungselemente vorgesehen ist, und,
wenn ein metallischer Fremdkörper erfasst wird, die Drehantriebseinheit all die getrennten Abdeckungselemente rotiert.

10. Verfahren für eine kontaktlose Energieübertragung für ein Fahrzeug nach Anspruch 1, wobei die Fremdkörperentfernungseinheit (70) einen Luftkompressor (84) umfasst, welcher, wenn ein metallischer Fremdkörper erfasst wird, Hochgeschwindigkeitsluft zu einer Luftlücke hin bläst, welche zwischen der Energieübertragungsspule und der Energieaufnahmespule ausgebildet ist.

11. Verfahren für eine kontaktlose Energieübertragung für ein Fahrzeug nach Anspruch 1, wobei
die Fremdkörperentfernungseinheit (70) ein Förderband aus Harz und ein Paar Rollen (86, 87) umfasst,
das Paar Rollen eine antreibende Rolle und eine angetriebene Rolle umfasst, welche das Förderband in einer rundumlaufend fahrenden Weise tragen,
das Paar Rollen das Förderband derart trägt, dass eine Seite des rundumlaufend fahrenden Förderbands die Oberseite der Energieübertragungsspule abdeckt, und,
wenn ein metallischer Fremdkörper erfasst wird, die antreibende Rolle bewirkt, dass das Förderband in einer rundumlaufenden Weise fährt, so dass die Seite des Förderbands, welcher die Oberseite der Energieübertragungsspule abdecket, erneuert wird.

12. Verfahren für eine kontaktlose Energieübertragung für ein Fahrzeug nach Anspruch 1, wobei
die Fremdkörperentfernungseinheit (70) ein Wischelement (88) und eine Wischantriebseinheit umfasst,
das Wischelement die Oberseite der Energieübertragungsspule abwischt,
die Wischantriebseinheit das Wischelement antriebt, und,
wenn ein metallischer Fremdkörper erfasst wird, die Wischantriebseinheit das Wischelement derart antreibt, dass die Oberseite der Energieübertragungsspule mittels des Wischelements abgewischt wird.

## Revendications

1. Procédé de transfert d'énergie sans contact pour un véhicule, comprenant :
a. l'obtention d'une valeur standard de perte de transfert d'énergie Pₛ à l'avance en fournissant de l'énergie électrique à des fins de détection de corps étranger à une bobine de transmission d'énergie (31) installée côté terre dans un état dans lequel un corps étranger métallique (100) n'est pas présent sur la bobine de transmission d'énergie (31) et le stockage de la valeur standard Pₛ dans une unité mémoire (57) (étape 21)
b. la fourniture d'énergie électrique à des fins de détection de corps étranger à la bobine de transmission d'énergie (31) lorsqu'un véhicule cible d'un transfert d'énergie sans contact se rapproche et se trouve dans un état dans lequel la bobine de transmission d'énergie n'est pas positionnée face à une bobine de réception d'énergie (32) installée sur le véhicule cible (étape 22)
c. l'obtention d'une valeur mesurée de perte d'énergie dans l'unité de détection de corps étranger ;
d. le calcul d'une différence entre la valeur mesurée de c. et la valeur standard Pₛ (étape 28),
e. l'envoi d'un signal de détection de corps étranger à un appareil d'élimination de corps étranger (70) si une valeur absolue de la différence entre la valeur mesurée et la valeur standard dépasse une valeur seuil (étape 29, 30),
f. la réception d'informations sur un achèvement d'élimination de corps étranger, de l'appareil d'élimination de corps étranger (70) (étape 31)
g. le transfert d'énergie de la bobine de transmission d'énergie (31) à la bobine de réception d'énergie (32) par induction électromagnétique dans un état dans lequel la bobine de réception d'énergie est positionnée face à la bobine de transmission d'énergie de part et d'autre d'un espace (étape 32, 33).

2. Procédé de transfert d'énergie sans contact pour un véhicule selon la revendication 1, dans lequel l'obtention de la valeur standard en a. et de la valeur mesurée en c. comprend les étapes de procédé :
a1./c1. le calcul d'une perte de cuivre P_{c1} (= r₁ x I_{IN}²) à partir d'une résistance à enroulement (r₁) et de I_{IN} de la bobine de transmission d'énergie (31) qui sont obtenus à l'avance et, si P_{IN0} représente une énergie d'entrée de la bobine de transmission d'énergie (31),
a2./c2. l'utilisation d'une valeur exprimée par (P_{IN0}-P_{c1}) comme valeur mesurée/valeur standard dans l'unité de détection de corps étranger.

3. Procédé de transfert d'énergie sans contact pour un véhicule selon la revendication 1, dans lequel l'obtention de la valeur standard en a. et de la valeur mesurée en c. comprend les étapes de procédé :
a1./c1. le calcul d'une valeur estimative de perte de fer (P_{f1}) de la bobine de transmission d'énergie (31) à partir du paramètre de perte de fer et de V_{IN} de la bobine de transmission d'énergie (31) qui sont obtenus à l'avance,
a2./c2. le calcul d'une perte de cuivre P_{c1} (=r₁ x I_{IN}²) à partir d'une résistance à enroulement (r₁) et de I_{IN} de la bobine de transmission d'énergie (31) qui sont obtenus à l'avance
a3./c3. l'utilisation d'une valeur exprimée par (P_{IN0}-P_{c1}-P_{f1}) comme valeur standard /valeur mesurée dans l'unité de détection de corps étranger si P_{IN0} représente une énergie d'entrée de la bobine de transmission d'énergie.

4. Procédé de transfert d'énergie sans contact pour un véhicule selon la revendication 1, dans lequel l'énergie électrique à des fins de détection de corps étranger est inférieure ou égale à 20 % d'une puissance nominale de transfert d'énergie.

5. Procédé de transfert d'énergie sans contact pour un véhicule selon la revendication 1, dans lequel, sur la base du signal de détection de corps étranger émis par l'unité de détection de corps étranger, les étapes suivantes sont effectuées :
l'arrêt de la fourniture de l'énergie électrique à des fins de détection de corps étranger à la bobine de transmission d'énergie, et
l'affichage d'un avertissement de détection de corps étranger.

6. Procédé de transfert d'énergie sans contact pour un véhicule selon la revendication 5, comprenant :
à chaque fois qu'un délai préalablement défini s'est écoulé,
la fourniture de l'énergie électrique à des fins de détection de corps étranger à la bobine de transmission d'énergie à laquelle la fourniture de l'énergie électrique à des fins de détection de corps étranger s'était arrêtée, et la réalisation, une nouvelle fois, d'une détection par l'opération de détection de corps étranger, et
lorsque l'unité de détection de corps étranger ne détecte aucun corps étranger métallique, la fourniture d'énergie électrique aux fins de transfert d'énergie à la bobine de transmission d'énergie.

7. Procédé de transfert d'énergie sans contact pour un véhicule selon la revendication 1, comprenant :
la notification de l'unité de détection de corps étranger concernant une élimination par l'unité d'élimination de corps étranger (70) qui a éliminé un corps étranger métallique de la face supérieure de la bobine de transmission d'énergie,
la réception d'une notification et la réalisation d'une détection pour un corps étranger métallique sur la bobine de transmission d'énergie par l'unité de détection de corps étranger, et
lorsqu'aucun corps étranger métallique n'est détecté, la fourniture d'énergie électrique aux fins de transfert d'énergie à la bobine de transmission d'énergie.

8. Procédé de transfert d'énergie sans contact pour un véhicule selon la revendication 1, dans lequel l'unité de détection de corps étranger (70) comprend :
un élément de protection non magnétique et non conducteur (81) qui couvre une face supérieure de la bobine de transmission d'énergie ;
une unité pivotante (82) qui soutient de manière pivotante l'élément de protection dans une position en bordure de la bobine de transmission d'énergie de sorte que l'élément de protection peut tourner d'un angle prédéterminé autour d'une ligne d'axe parallèle à la face supérieure de la bobine de transmission d'énergie ; et
une unité d'entraînement rotative (83) qui fait tourner, lorsqu'un corps étranger métallique est détecté, l'élément de protection d'un angle prédéterminé autour de la ligne d'axe.

9. Procédé de transfert d'énergie sans contact pour un véhicule selon la revendication 8, dans lequel
l'élément de protection est composé d'une pluralité d'éléments de protection séparés (811, 812) qui couvrent séparément la face supérieure de la bobine de transmission d'énergie,
l'unité pivotante (82) est fournie à chacun des éléments de protection séparés et, lorsqu'un corps étranger métallique est détecté, l'unité d'entraînement rotative fait tourner l'ensemble des éléments de protection séparés.

10. Procédé de transfert d'énergie sans contact pour un véhicule selon la revendication 1, dans lequel
l'unité d'élimination de corps étranger (70) comprend un compresseur d'air (84) qui insuffle, lorsqu'un corps étranger métallique est détecté, de l'air à haute vitesse dans un entrefer formé entre la bobine de transmission d'énergie et la bobine de réception d'énergie.

11. Procédé de transfert d'énergie sans contact pour un véhicule selon la revendication 1, dans lequel
l'unité d'élimination de corps étranger (70) comprend une bande transporteuse de résine et une paire de rouleaux (86, 87),
la paire de rouleaux comprend un rouleau moteur et un rouleau mené qui soutiennent la bande transporteuse en la faisant avancer de manière circulaire,
la paire de rouleaux soutient la bande transporteuse de sorte qu'une face de la bande transporteuse avançant de manière circulaire couvre la face supérieure de la bobine de transmission d'énergie et,
lorsqu'un corps étranger métallique est détecté, le rouleau moteur amène la bande transporteuse à avancer de manière circulaire de sorte que la face de la bande transporteuse qui couvre la face supérieure de la bobine de transmission d'énergie est renouvelée.

12. Procédé de transfert d'énergie sans contact pour un véhicule selon la revendication 1, dans lequel
l'unité d'élimination de corps étranger (70) comprend un élément essuyeur (88) et une unité d'entraînement d'essuyeur,
l'élément essuyeur essuie la face supérieure de la bobine de transmission d'énergie,
l'unité d'entraînement d'essuyeur entraîne l'élément essuyeur et,
lorsqu'un corps étranger métallique est détecté, l'unité d'entraînement d'essuyeur entraîne l'élément essuyeur de sorte que la face supérieure de la bobine de transmission d'énergie est essuyée par l'élément essuyeur.
